# EUROPEAN PATENT APPLICATION

(11) **EP 4 737 142 A1**
(43) Date of publication of application: **06.05.2026**
(21) Application number: 24850826.9
(22) Date of filing: 27.07.2024
(51) Int. Cl.: B60G 17/052, B60G 17/015

(54) **AIR SUSPENSION SYSTEM AND VEHICLE**

(30) Priority: 07.08.2023 CN 202310996395
(71) Applicant: Shenzhen Yinwang Intelligent Technologies Co., Ltd., Shenzhen, Guangdong 518110 (CN)
(72) Inventor: LIU, Xuhui, Shenzhen, Guangdong 518129 (CN); HE, Lang, Shenzhen, Guangdong 518129 (CN); LIU, Donghao, Shenzhen, Guangdong 518129 (CN)
(74) Representative: MERH-IP Matias Erny Reichl Hoffmann Patentanwälte PartG mbB
(86) International application number: PCT/CN2024/108018
(87) International publication number: WO 2025/031177

(57) **Abstract**

This application provides an air suspension system and a vehicle. The air suspension system includes a first air spring, a second air spring, and an air storage component. The air suspension system further includes a first solenoid valve connected to the first air spring, a second solenoid valve connected to the second air spring, a third solenoid valve connected between the first solenoid valve and the air storage component, and a fourth solenoid valve connected between the second solenoid valve and the air storage component. In a case in which the first solenoid valve, the second solenoid valve, the third solenoid valve, and the fourth solenoid valve are all powered on and turned on, the first solenoid valve, the third solenoid valve, and the air storage component form a first air path, the second solenoid valve, the fourth solenoid valve, and the air storage component form a second air path, the air storage component inflates the first air spring through the first air path, and the air storage component inflates the second air spring through the second air path, so that a vehicle body height of a front axle and a vehicle body height of a rear axle of the vehicle can be synchronously raised.

## Description

This application claims priority to Chinese Patent Application No. 202310996395.4, filed with the China National Intellectual Property Administration on August 7, 2023, and entitled "AIR SUSPENSION SYSTEM AND VEHICLE", which is incorporated herein by reference in its entirety.

### TECHNICAL FIELD

This application relates to the field of suspension technologies, and in particular, to an air suspension system and a vehicle.

### BACKGROUND

As people pursue a better driving experience, they have higher requirements for safety and comfort of transportation means. In recent years, vehicles increasingly use intelligent electronically controlled components such as an electronically controlled air suspension (Electronic Air Suspension) system. The electronically controlled air suspension system can adjust a vehicle body height based on a choice of a driver, to improve ride comfort, handling stability, and the like of the vehicle. However, although the existing electronically controlled air suspension system has a basic height adjustment function, a vehicle body height of a front axle of the vehicle cannot be adjusted synchronously with a vehicle body height of a rear axle of the vehicle. This results in adverse impact on comfort and safety of the vehicle.

### SUMMARY

Embodiments of this application provide an air suspension system and a vehicle, to synchronously raise a vehicle body height of a front axle and a vehicle body height of a rear axle of the vehicle.

According to a first aspect, this application provides an air suspension system, applied to a vehicle. The air suspension system includes a first air spring, a second air spring, and an air storage component. The first air spring is configured to adjust a vehicle body height of a front axle of a vehicle. The second air spring is configured to adjust a vehicle body height of a rear axle of the vehicle. The air suspension system further includes a first solenoid valve connected to the first air spring, a second solenoid valve connected to the second air spring, a third solenoid valve connected between the first solenoid valve and the air storage component, and a fourth solenoid valve connected between the second solenoid valve and the air storage component. The first solenoid valve, the second solenoid valve, the third solenoid valve, and the fourth solenoid valve can all be turned on when powered on, or be turned off when powered off. In a case in which the first solenoid valve, the second solenoid valve, the third solenoid valve, and the fourth solenoid valve are all powered on and turned on, the first solenoid valve, the third solenoid valve, and the air storage component form a first air path, and the second solenoid valve, the fourth solenoid valve, and the air storage component form a second air path. The air storage component inflates the first air spring through the first air path, and the air storage component inflates the second air spring through the second air path.

The first air spring and the second air spring are separately inflated through different air paths. Inflation of the first air spring by the air storage component and inflation of the second air spring by the air storage component do not affect each other. Even if pressure in the first air spring is different from that in the second air spring, a higher-pressure air spring of the first air spring and the second air spring does not inflate a lower-pressure air spring, thereby synchronously raising the vehicle body height of the front axle and the vehicle body height of the rear axle of the vehicle, and reducing a possibility that a vehicle body is lowered when the front axle and the rear axle of the vehicle are synchronously raised in height. This helps improve comfort and safety of the vehicle.

In addition, because the first air spring and the second air spring are separately inflated through different air paths, the first air spring and the second air spring do not need to be alternately inflated, to alternately raise the vehicle body height of the front axle and the vehicle body height of the rear axle of the vehicle. This helps improve inflation efficiency of the air suspension system and efficiency in raising the vehicle body.

According to the first aspect, in a possible implementation of this application, the air suspension system further includes a deflation unit and a fifth solenoid valve. The fifth solenoid valve is connected between the first solenoid valve and the second solenoid valve. The fifth solenoid valve is turned on when powered on, or is turned off when powered off.

A solenoid control valve is introduced between a first solenoid valve of the front axle and a second valve of the rear axle, so that reliability and availability of the entire air suspension system are achieved.

The fifth solenoid valve is powered off and turned off in a process of synchronously raising the vehicle body height of the front axle and the vehicle body height of the rear axle of the vehicle. In this way, the first solenoid valve and the first solenoid valve are disconnected and decoupled, so that the first air spring and the second air spring are separately inflated through different air paths and do not affect each other. When at least one of the second air spring and the second air spring on the rear axle are deflated, the fifth solenoid valve is powered on and turned on, which facilitates deflation of the second air spring and the second air spring.

According to the first aspect, in a possible implementation of this application, in a case in which the third solenoid valve fails, the fifth solenoid valve is powered on and turned on, the air storage component, the fourth solenoid valve, the fifth solenoid valve, and the first solenoid switch can form a path to inflate the first air spring, and the second solenoid switch, the fifth solenoid valve, and the deflation unit can form a path to deflate the second air spring.

In a case in which the third solenoid valve fails, the fifth solenoid valve is powered on and turned on, and the air storage component, the fourth solenoid valve, the fifth solenoid valve, and the first solenoid switch can form a path, so that the air suspension system can work normally, and the availability of the air suspension system is improved when a device fails.

According to the first aspect, in a possible implementation of this application, in a case in which the fourth solenoid valve fails, the fifth solenoid valve and the first solenoid valve are both powered on and turned on, and the fourth solenoid valve, the fifth solenoid valve, and the first solenoid valve all communicate with the air storage component, to inflate the first air spring.

In a case in which the fourth solenoid valve fails, the fifth solenoid valve is powered on and turned on, and the air storage component, the third solenoid valve, the fifth solenoid valve, and the second solenoid switch can form a path to inflate the second air spring, so that the air suspension system can work normally, and the availability of the air suspension system is improved when a device fails.

According to the first aspect, in a possible implementation of this application, the air storage component includes a first air storage tank and a second air storage tank. The third solenoid valve is connected between the first air storage tank and the first solenoid valve. The fourth solenoid valve is connected between the second air storage tank and the second solenoid valve.

The air storage component includes the first air storage tank and the second air storage tank. This helps increase an air storage capacity, improve inflation efficiency of the air suspension system, and also improve layout flexibility of the air suspension system on the vehicle.

According to the first aspect, in a possible implementation of this application, in a case in which the first air storage tank fails, when the fifth solenoid valve, the fourth solenoid valve, and the first solenoid valve are all powered on and turned on, and the third solenoid valve is powered off and turned off, the fourth solenoid valve, the fifth solenoid valve, and the first solenoid valve communicate with the second air storage tank, to inflate the first inflation spring.

When the first air storage tank fails, the first inflation spring and a second inflation spring may both be inflated by the second air storage tank.

According to the first aspect, in a possible implementation of this application, in a case in which the second air storage tank fails, the fourth solenoid valve is powered off and turned off, the third solenoid valve and the fifth solenoid valve are powered on and turned on, and the third solenoid valve, the fifth solenoid valve, and the second solenoid valve communicate with the first air storage tank, to inflate the second inflation spring.

According to the first aspect, in a possible implementation of this application, the air storage component includes a first output port and a second output port. The first output port is connected to the third solenoid valve, and the second output port is connected to the fourth solenoid valve.

The first output port is connected to the third solenoid valve, and the second output port is connected to the fourth solenoid valve. In other words, using the same air storage component for air storage and inflation helps reduce a quantity of elements in the air suspension system and simplify a structure of the air suspension system.

According to the first aspect, in a possible implementation of this application, there are at least two first air springs, and a quantity of first solenoid valves is in a one-to-one correspondence with a quantity of first air springs. There are at least two second air springs, and a quantity of second solenoid valves is in a one-to-one correspondence with a quantity of second air springs.

The quantity of the first air springs and the quantity of the second air springs are set to adapt to different vehicle types, and an application scope of the air suspension system is improved.

According to the first aspect, in a possible implementation of this application, the air suspension system further includes a first pressure sensor. The first pressure sensor is connected to the air storage component and configured to detect air pressure in the air storage component.

According to a second aspect, an embodiment of this application further provides a vehicle, including the air suspension system according to the first aspect.

Because a first air spring and a second air spring in the air suspension system can be simultaneously inflated, a vehicle body height of a front axle and a vehicle body height of a rear axle of the vehicle can be synchronously raised. This helps improve comfort and safety of the vehicle.

### BRIEF DESCRIPTION OF DRAWINGS

FIG. 1 is a diagram of a structure of a common air suspension system;
FIG. 2 is a diagram of a structure of a vehicle according to an embodiment of this application;
FIG. 3 is a diagram of connections of a suspension system of a vehicle according to an embodiment of this application; and
FIG. 4 is a diagram of a structure of an air suspension system according to another embodiment of this application.

### DESCRIPTION OF EMBODIMENTS

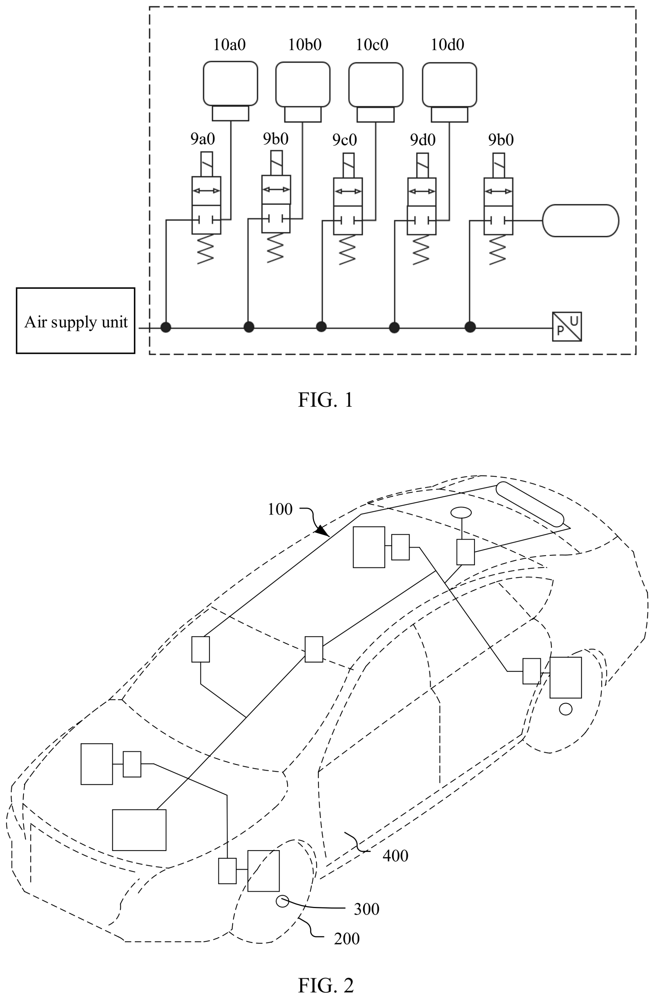

Refer to FIG. 1. FIG. 1 is a diagram of a structure of a common air suspension system. The air suspension system includes an air supply unit, a plurality of solenoid switches, and a plurality of air springs. The plurality of solenoid valves are respectively a solenoid valve 9a0, a solenoid valve 9b0, a solenoid valve 9c0, and a solenoid valve 9d0. The solenoid valve is controlled by an electrical signal to achieve turning on or off an air path. The solenoid valve is a normally turned off valve. In other words, the solenoid valve is turned off when powered off, or is turned on when powered on, so that a height of an air spring can be maintained. The plurality of air springs are respectively a left front air spring 10a0 mounted on a left front wheel of a vehicle, a right front air spring 10b0 mounted on a right front wheel of the vehicle, a left rear air spring 10c0 mounted on a left rear wheel of the vehicle, and a right rear air spring 10d0 mounted on a right rear wheel of the vehicle. The air spring is mounted between a vehicle body and a tire, to support the vehicle body. A vehicle body height may be raised by inflating the air spring. The vehicle body height may be lowered by deflating the air spring. During adjustment of a vehicle height, a controller mainly controls the plurality of solenoid valves based on a sensor signal, to inflate or deflate the air spring, so that the vehicle height is adjusted.

However, if the solenoid valves 9a0, 9b0, 9c0, and 9d0 are simultaneously turned on, air cross-flow occurs from a high-pressure axial to a low-pressure axial. In other words, a high-pressure air spring inflates a low-pressure air spring. This results in an unexpected lowering of the vehicle body for a user. In addition, because a front axle and a rear axle cannot be simultaneously adjusted in height, the front axle and the rear axle can only be adjusted in height alternately. As a result, time for a height adjustment process is prolonged, the vehicle is significantly pitched during the height adjustment process, and ride comfort and safety are affected during height adjustment. For example, when the vehicle is statically adjusted in height, pitch of the vehicle body worsens comfort, or when the vehicle is dynamically adjusted in height during traveling, pitch of the vehicle body worsens comfort and safety.

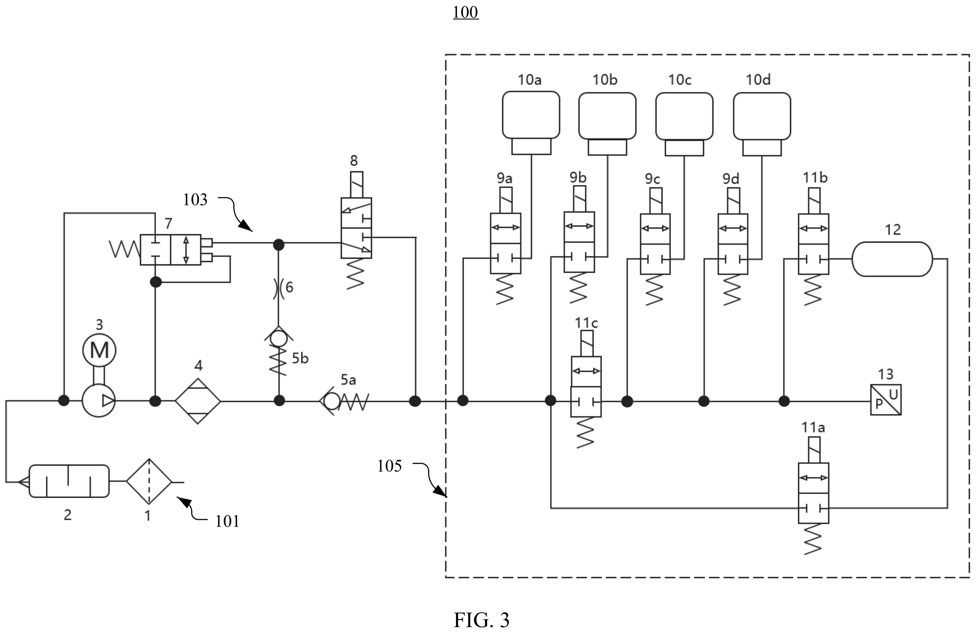

In view of this, this application provides a vehicle and an air suspension system of the vehicle. FIG. 2 is a diagram of a structure of a vehicle according to an embodiment of this application. FIG. 3 is a diagram of connections of a suspension system of a vehicle according to an embodiment of this application. As shown in FIG. 2 and FIG. 3, the vehicle provided in this application includes a vehicle body 400, an axle 300, a wheel 200, and an air suspension system 100. The wheel 200 is mounted on the axle 300, and the air suspension system 100 is mounted between the axle 300 and the vehicle body 400.

In some implementations of this application, the axle 300 includes a front axle and a rear axle, the vehicle is a four-wheeled vehicle, and the wheel 200 includes a front axle left wheel, a front axle right wheel, a rear axle left wheel, and a rear axle right wheel. The front axle of the vehicle is supported by the front axle left wheel and the front axle right wheel, and the rear axle of the vehicle is supported by the front axle left wheel and the front axle right wheel.

The air suspension system 100 includes an air supply unit 101, a deflation unit 103, and an air suspension 105. The air supply unit 101 and the deflation unit 103 are both connected to the air suspension 105. The air supply unit 101 is configured to supply air to the air suspension 105. The deflation unit 103 is configured to deflate the air suspension 105, to lower a vehicle body height. The air suspension 105 is mounted between the vehicle body 400 and the axle 300 of the vehicle, and the air suspension 105 is configured to adjust a vehicle body height of the vehicle. The air suspension system 100 may further include devices such as a height sensor and a controller. Details are not described in this application.

The air supply unit 101 includes an air filter 1, a muffler 2, an air compressor 3, an air dryer 4, and a first one-way valve 5a that are sequentially connected through a pipe. The air filter 1 is configured to filter and purify air entering the air filter 1, to prevent foreign objects in the air from contaminating the device in the air suspension system 100. The muffler 2 is configured to reduce noise generated when air flows in the air suspension system 100, to reduce vehicle vibration. The air compressor 3 is configured to compress air in the atmosphere into high-pressure air and store the high-pressure air in the air suspension 105. The air dryer 4 is configured to filter foreign objects such as moisture and dust in the air. The first one-way valve 5a is connected between the air dryer 4 and the air suspension 105, and configured to transfer air flowing out of the air dryer 4 to the air suspension 105 and prevent air from flowing from the air suspension 105 back to the air dryer 4.

The deflation unit 103 includes a second one-way valve 5b, a throttle valve 6, an electronic exhaust valve 7, and a pneumatic exhaust valve 8. The second one-way valve 5b is connected to a pipe between the air dryer 4 and the first one-way valve 5a. The throttle valve 6 is connected to the second one-way valve 5b through a pipe. The electronic exhaust valve 7 is connected between the air suspension 105 and the throttle valve 6, and is configured to deflate the air suspension 105. The throttle valve 6 is connected between the electronic exhaust valve 7 and the second one-way valve 5b. The throttle valve 6 is configured to control an airflow from the electronic exhaust valve 7 to the second one-way valve 5b. The pneumatic exhaust valve 8 is connected to the throttle valve 6 through a pipe. The electronic exhaust valve 7 is a two-position three-way valve. The electronic exhaust valve 7 includes a first channel and a second channel that can be turned off and turned on. When the first channel is turned on, the first channel communicates with the outside, and air flowing out of the air suspension 105 may enter the outside through the first channel. In other words, the electronic exhaust valve 7 discharges the air discharged from the air suspension 105 to the outside. When the second channel is turned on, the air flowing out of the air suspension 105 may partially enter the pneumatic exhaust valve 8 through the second channel, and partially enter the air dryer 4 through the throttle valve 6 and the second one-way valve 5b. In other words, the electronic exhaust valve 7 may be selectively connected to the outside or a pipe between the pneumatic exhaust valve 8 and the throttling valve 6. The pneumatic exhaust valve 8 communicates with the air dryer 4 when internal air pressure reaches a preset threshold.

The air suspension 105 includes a first solenoid valve 9a, a first solenoid valve 9b, a second solenoid valve 9c, a second solenoid valve 9d, a first air spring 10a, a first air spring 10b, a second air spring 10c, a second air spring 10d, a third solenoid valve 11a, a fourth solenoid valve 11b, a fifth solenoid valve 11c, and an air storage component 12. The first air spring 10a is disposed on the front axle left wheel of the vehicle. The first air spring 10b is disposed on the front axle right wheel of the vehicle. The first air spring 10a and the first air spring 10b are configured to adjust a vehicle body height of the front axle of the vehicle. The second air spring 10c is disposed on the rear axle left wheel of the vehicle. The second air spring 10d is disposed on the rear axle right wheel of the vehicle. The second air spring 10c and the second air spring 10d are configured to adjust the vehicle body height of the front axle of the vehicle.

The first solenoid valve 9a, the first solenoid valve 9b, the second solenoid valve 9c, the second solenoid valve 9d, the third solenoid valve 11a, the fourth solenoid valve 11b, and the fifth solenoid valve 11c are all normally turned off solenoid valves. The normally turned off solenoid valve is turned on when powered on, or is turned off when powered off.

The first solenoid valve 9a and the first solenoid valve 9b are connected through a pipe. The first solenoid valve 9a and the first solenoid valve 9b are both connected to the first one-way valve 5a through a pipe.

The first air spring 10a is connected to the first solenoid valve 9a through a pipe. The first solenoid valve 9a is configured to control inflation and deflation of the first air spring 10a. The first air spring 10b is connected to the first solenoid valve 9b through a pipe. The first solenoid valve 9b is configured to control inflation and deflation of the first air spring 10b.

The second air spring 10c is connected to the second solenoid valve 9c through a pipe. The second solenoid valve 9c is configured to control inflation and deflation of the second air spring 10c. The second air spring 10d is connected to the second solenoid valve 9d. The second solenoid valve 9d is configured to control inflation and deflation of the second air spring 10d.

The third solenoid valve 11a is connected to the first solenoid valve 9a through a pipe. The third solenoid valve 11a is connected to the first solenoid valve 9b through a pipe. The third solenoid valve 11a is configured to control flow and shut-off of air in a pipe between the first solenoid valve 9a and the air storage component 12. The third solenoid valve 11a is configured to control flow and shut-off of air in a pipe between the first solenoid valve 9b and the air storage component 12. The first solenoid valve 9a and the first solenoid valve 9b may be connected to the third solenoid valve 11a through a same pipe or different pipes.

The fourth solenoid valve 11b is connected to the second solenoid valve 9c through a pipe. The fourth solenoid valve 11b is connected to the second solenoid valve 9d through a pipe.

The fifth solenoid valve 11c is connected to a pipe between the first solenoid valve 9a and the first solenoid valve 9b through a pipe. The fifth solenoid valve 11c is connected to a pipe between the second solenoid valve 9c and the second solenoid valve 9d through a pipe. The fifth solenoid valve 11c is configured to control flow and shut-off air in a pipe between a first solenoid switch and a second solenoid switch.

The air storage component 12 is configured to store high-pressure air provided by the air supply unit 101. The air storage component 12 includes a first output port and a second output port. The first output port is connected to the fourth solenoid valve 11b. The first output port is connected to the third solenoid valve 11a, and is configured to transfer the high-pressure air to the first air spring 10a and the first air spring 10b. The third solenoid valve 11a controls flow and shut-off of air between the first solenoid valve 9a and the first output port of the air storage component 12 and flow and shut-off of air between the first solenoid valve 9b and the first output port of the air storage component 12. The second output port is connected to the fourth solenoid valve 11b, and is configured to transfer the high-pressure air to the second air spring 10c and the second air spring 10d. In this implementation, the air storage component 12 is an air storage tank. Using the same air storage tank for air storage and inflation helps reduce a quantity of elements in the air suspension system 100 and simplify a structure of the air suspension system 100.

The fourth solenoid valve 11b controls flow and shut-off of air between the second solenoid valve 9c and the second output port of the air storage component 12 and flow and shut-off of air between the second solenoid valve 9d and the second output port of the air storage component 12.

Each solenoid valve in the air suspension system 100 is controlled by using an electrical signal, so that different adjustments of the vehicle body height or a posture of the vehicle can be implemented. The following briefly describes by using some examples.

When the vehicle body height of the front axle and the vehicle body height of the rear axle of the vehicle need to be synchronously raised, the first solenoid valve 9a, the first solenoid valve 9b, the second solenoid valve 9c, the second solenoid valve 9d, the third solenoid valve 11a, and the fourth solenoid valve 11b are all powered on and turned on, the fifth solenoid valve 11c is powered off and turned off, the first solenoid valve 9a and the first solenoid valve 9b are both disconnected from the second solenoid valve 9c, and the first solenoid valve 9a and the first solenoid valve 9b are both disconnected from the second solenoid valve 9d. The first solenoid valve 9a, the third solenoid valve 11a, and the first output port of the air storage component 12 form a first air path A. The first solenoid valve 9b, the third solenoid valve 11a, and the first output port of the air storage component 12 form a first air path B. The second solenoid valve 9c, the fourth solenoid valve 11b, and the second output port of the air storage component 12 form a second air path C. The second solenoid valve 9d, the fourth solenoid valve 11b, and the second output port of the air storage component 12 form a second air path D. The air storage component 12 inflates the first air spring 10a through the first air path A. The air storage component 12 inflates the first air spring 10b through the first air path B. The air storage component 12 inflates the second air spring 10c through the second air path C. The air storage component 12 inflates the second air spring 10d through the second air path D. In this way, the vehicle body height of the front axle and the vehicle body height of the rear axle of the vehicle can be synchronously raised.

In a process of synchronously raising the vehicle body height of the front axle and the vehicle body height of the rear axle of the vehicle, the first air spring and the second air spring are separately inflated through different air paths. In this way, inflation of the first air spring by the air storage component 12 and inflation of the second air spring by the air storage component 12 do not affect each other. Even if pressure in the first air spring is different from that in the second air spring, a higher-pressure air spring of the first air spring and the second air spring does not inflate a lower-pressure air spring, thereby reducing a possibility that a vehicle body is lowered when the front axle and the rear axle of the vehicle are synchronously raised in height.

In addition, because the first air spring and the second air spring are separately inflated through different air paths, the first air spring and the second air spring do not need to be alternately inflated, to alternately raise the vehicle body height of the front axle and the vehicle body height of the rear axle of the vehicle. This helps improve inflation efficiency of the air suspension system 100 and efficiency in raising the vehicle body.

When the vehicle body height of the front axle and the vehicle body height of the rear axle of the vehicle need to be synchronously lowered, the first solenoid valve 9a, the first solenoid valve 9b, the second solenoid valve 9c, the second solenoid valve 9d, and the fifth solenoid valve 11c are all powered on and turned on, the third solenoid valve 11a and the fourth solenoid valve 11b are powered off and turned off, and the first air spring 9a, the first air spring 9b, the second air spring 9c, and the second air spring 9d all communicate with the deflation unit 103 for deflation.

The fifth solenoid valve 11c is powered off and turned off in the process of synchronously raising the vehicle body height of the front axle and the vehicle body height of the rear axle of the vehicle. In this way, the first solenoid valve 9a and the first solenoid valve 9b are disconnected and decoupled, so that the first air spring and the second air spring are separately inflated through different air paths and do not affect each other. When the second air spring 10c and the second air spring 10d on the rear axle need to be deflated, the fifth solenoid valve 11c is powered on and turned on, which facilitates deflation of the second air spring 10c and the second air spring 10d.

The first air spring 10a or the first air spring 10b may also be separately inflated. An example in which the first air spring 10a is separately inflated is used. The first solenoid valve 9a and the third solenoid valve 11a are powered on and turned on, the first solenoid valve 9b, the second solenoid valve 9c, the second solenoid valve 9d, the fourth solenoid valve 11b, and the fifth solenoid valve 11c are all powered off and turned off, and the high-pressure air in the air storage component 12 enters the first air spring 10a through the third solenoid valve 11a and the first solenoid valve 9a for inflation.

The second air spring 10c or the second air spring 10d may also be separately inflated. An example in which the second air spring 10c is separately inflated is used. The second solenoid valve 9c and the fourth solenoid valve 11b are powered on and turned on, the first solenoid valve 9a, the first solenoid valve 9b, the second solenoid valve 9d, the third solenoid valve 11a, and the fifth solenoid valve 11c are all powered off and turned off, and the high-pressure air in the air storage component 12 enters the second air spring 10c through the fourth solenoid valve 11b and the second solenoid valve 9c for inflation.

The first air spring 10a or the first air spring 10b may also be separately deflated. An example in which the first air spring 10a is separately deflated is used. The first solenoid valve 9a is powered on and turned on, the first solenoid valve 9b, the second solenoid valve 9c, the second solenoid valve 9d, the third solenoid valve 11a, the fourth solenoid valve 11b, and the fifth solenoid valve 11c are all powered off and turned off, and air in the first air spring 10a is discharged into the deflation unit 103 through the first solenoid valve 9a.

The second air spring 10c or the second air spring 10d may also be separately deflated. An example in which the second air spring 10c is separately deflated is used. The second solenoid valve 9c and the fifth solenoid valve 11c are powered on and turned on, the first solenoid valve 9a, the first solenoid valve 9b, the second solenoid valve 9d, the third solenoid valve 11a, and the fourth solenoid valve 11b are all powered off and turned off, and air in the second air spring 10c is discharged into the deflation unit 103 through the second solenoid valve 9c and the fifth solenoid valve 11c.

This application may further achieve inflation or deflation of each air spring by implementing another control strategy for each solenoid valve. For example, when the third solenoid valve 11a is faulty and cannot work, the air suspension 105 may work normally by using the fifth solenoid valve 11c. A fault of the third solenoid valve 11a usually means that the third solenoid valve 11a is damaged and blocked, and cannot be used.

In a case in which the third solenoid valve 11a is faulty and cannot work, when the vehicle body height of the front axle and the vehicle body height of the rear axle of the vehicle need to be synchronously raised, the first solenoid valve 9a, the first solenoid valve 9b, the second solenoid valve 9c, the second solenoid valve 9d, the fifth solenoid valve 11c, and the fourth solenoid valve 11b are powered on and turned on, the high-pressure air in the air storage component 12 is inflated into the first air spring 10a through the fourth solenoid valve 11b, the fifth solenoid valve 11c, and the first solenoid valve 9a, the high-pressure air in the air storage component 12 is inflated into the first air spring 10b through the fourth solenoid valve 11b, the fifth solenoid valve 11c, and the first solenoid valve 9b, the high-pressure air in the air storage component 12 is inflated into the second air spring 10c through the fourth solenoid valve 11b and the second solenoid valve 9c, and the high-pressure air in the air storage component 12 is inflated into the second air spring 10d through the fourth solenoid valve 11b and the second solenoid valve 9d. In other words, the second output port of the air storage component 12, the fourth solenoid valve 11b, and the fifth solenoid valve 11c can form an inflation channel for inflating the first air spring 10a and the first air spring 10b.

In a case in which the third solenoid valve 11a is faulty and cannot work, when the vehicle body height of the front axle and the vehicle body height of the rear axle of the vehicle need to be synchronously lowered, the first solenoid valve 9a, the first solenoid valve 9b, the second solenoid valve 9c, the second solenoid valve 9d, and the fifth solenoid valve 11c are powered on and turned on, the fourth solenoid valve 11b is powered off and turned off, air in the first air spring 10a enters the deflation unit 103 through the first solenoid valve 9a, air in the first air spring 10b enters the deflation unit 103 through the first solenoid valve 9b, air in the second air spring 10c enters the deflation unit 103 through the second solenoid valve 9c and the fifth solenoid valve 11c, and air in the second air spring 10d enters the deflation unit 103 through the second solenoid valve 9d and the fifth solenoid valve 11c. A deflation channel is formed between the second solenoid valve 9c, the fifth solenoid valve 11c, and the air supply unit 101, to deflate the second air spring 10c. A deflation channel is formed between the second solenoid valve 9d, the fifth solenoid valve 11c, and the air supply unit 101, to deflate the second air spring 10d.

In a case in which the third solenoid valve 11a is faulty and cannot work, the first air spring 10a or the first air spring 10b may also be separately deflated. An example in which the first air spring 10a is separately deflated is used. The first solenoid valve 9a is powered on and turned on, the first solenoid valve 9b, the second solenoid valve 9c, the second solenoid valve 9d, the fourth solenoid valve 11b, and the fifth solenoid valve 11c are all powered off and turned off, and air in the first air spring 10a is discharged into the deflation unit 103 through the first solenoid valve 9a.

In a case in which the third solenoid valve 11a is faulty and cannot work, when the second air spring 10c or the second air spring 10d may also be separately deflated, an example in which the second air spring 10c is separately deflated is used. The second solenoid valve 9c and the fifth solenoid valve 11c are powered on and turned on, the first solenoid valve 9a, the first solenoid valve 9b, the second solenoid valve 9d, and the fourth solenoid valve 11b are all powered off and turned off, and air in the second air spring 10c is discharged into the deflation unit 103 through the second solenoid valve 9c and the fifth solenoid valve 11c.

For example, in some implementations of this application, when the fourth solenoid valve 11b is faulty and cannot work, the air suspension 105 may work normally by using the fifth solenoid valve 11c. A fault of the fourth solenoid valve 11b usually means that the fourth solenoid valve 11b is damaged and blocked, and cannot be used.

In a case in which the fourth solenoid valve 11b is faulty and cannot work, when the vehicle body height of the front axle and the vehicle body height of the rear axle of the vehicle need to be synchronously raised, the first solenoid valve 9a, the first solenoid valve 9b, the second solenoid valve 9c, the second solenoid valve 9d, the fifth solenoid valve 11c, and the third solenoid valve 11a are powered on and turned on, the high-pressure air in the air storage component 12 is inflated into the first air spring 10a through the third solenoid valve 11a and the first solenoid valve 9a, the high-pressure air in the air storage component 12 is inflated into the first air spring 10b through the third solenoid valve 11a and the first solenoid valve 9b, the high-pressure air in the air storage component 12 is inflated into the second air spring 10c through the third solenoid valve 11a, the fifth solenoid valve 11c, and the second solenoid valve 9c, and the high-pressure air in the air storage component 12 is inflated into the second air spring 10c through the third solenoid valve 11a, the fifth solenoid valve 11c, and the second solenoid valve 9c. In other words, the first output port of the air storage component 12, the third solenoid valve 11a, and the fifth solenoid valve 11c can form an inflation channel for inflating the second air spring 10c and the second air spring 10d.

In a case in which the fourth solenoid valve 11b is faulty and cannot work, when the raised vehicle body height of the front axle and the raised vehicle body height of the rear axle of the vehicle need to be synchronously lowered, the first solenoid valve 9a, the first solenoid valve 9b, the second solenoid valve 9c, the second solenoid valve 9d, and the fifth solenoid valve 11 c are powered on and turned on, the third solenoid valve 11a is powered off and turned off, air in the first air spring 10a enters the deflation unit 103 through the first solenoid valve 9a, air in the first air spring 10b enters the deflation unit 103 through the first solenoid valve 9b, air in the second air spring 10c enters the deflation unit 103 through the second solenoid valve 9c and the fifth solenoid valve 11c, and air in the second air spring 10d enters the deflation unit 103 through the second solenoid valve 9d and the fifth solenoid valve 11c. A deflation channel is formed between the second solenoid valve 9c, the fifth solenoid valve 11c, and the air supply unit 101, to deflate the second air spring 10c. A deflation channel is formed between the second solenoid valve 9d, the fifth solenoid valve 11c, and the air supply unit 101, to deflate the second air spring 10d.

In a case in which the fourth solenoid valve 11b is faulty and cannot work, the first air spring 10a or the first air spring 10b may also be separately deflated. An example in which the first air spring 10a is separately deflated is used. The first solenoid valve 9a is powered on and turned on, the first solenoid valve 9b, the second solenoid valve 9c, the second solenoid valve 9d, the third solenoid valve 11a, and the fifth solenoid valve 11c are all powered off and turned off, and air in the first air spring 10a is discharged into the deflation unit 103 through the first solenoid valve 9a.

In a case in which the fourth solenoid valve 11b is faulty and cannot work, when the second air spring 10c or the second air spring 10d may also be separately deflated, an example in which the second air spring 10c is separately deflated is used. The second solenoid valve 9c and the fifth solenoid valve 11c are powered on and turned on, the first solenoid valve 9a, the first solenoid valve 9b, the second solenoid valve 9d, and the third solenoid valve 11a are all powered off and turned off, and air in the second air spring 10c is discharged into the deflation unit 103 through the second solenoid valve 9c and the fifth solenoid valve 11c.

The air suspension 105 further includes a first pressure sensor 13. The first pressure sensor 13 is connected to the second solenoid valve 9c, the second solenoid valve 9d, and the fourth solenoid valve 11b. The first pressure sensor 13 is configured to detect pressure in the air storage component 12, the second air spring 10c, and the second air spring 10d. When the pressure in the air storage component 12 detected by the first pressure sensor 13 is lower than a preset value, the first solenoid valve 9a, the first solenoid valve 9b, the second solenoid valve 9c, the second solenoid valve 9d, the fourth solenoid valve 11b, and the fifth solenoid valve 11c are all powered off and turned off, the third solenoid valve 11a is powered on and turned on, and the high-pressure air output from the air supply unit 101 is inflated into the air storage component 12 for storage.

In some possible implementations of this application, when the pressure in the air storage component 12 detected by the first pressure sensor 13 is lower than the preset value, the first solenoid valve 9a, the first solenoid valve 9b, the second solenoid valve 9c, the second solenoid valve 9d, and the fifth solenoid valve 11c are all powered off and turned off, the fourth solenoid valve 11b and the fifth solenoid valve 11c are powered on and turned on, and the high-pressure air output from the air supply unit 101 is inflated into the air storage component 12 for storage.

It may be understood that a quantity of first air springs and a quantity of second air springs are not limited in this application. For example, in some possible implementations of this application, the vehicle may be a motorcycle, there is one first air spring, there is one second air spring, the first solenoid valve corresponds to the quantity of first air springs, and the second solenoid valve corresponds to the quantity of second air springs. The first air spring is disposed on a front axle wheel of the vehicle, and the second air spring 10d is disposed on a rear axle wheel of the vehicle. For another example, in some possible implementations of this application, the vehicle may be a tricycle, there is one first air spring, there are two second air spring, the first solenoid valve corresponds to the quantity of first air springs, and the second solenoid valve corresponds to the quantity of second air springs. The first air spring is disposed on a front axle wheel of the vehicle, one second air spring is disposed on a rear axle left wheel of the vehicle, and the other second air spring is disposed on a rear axle right wheel of the vehicle.

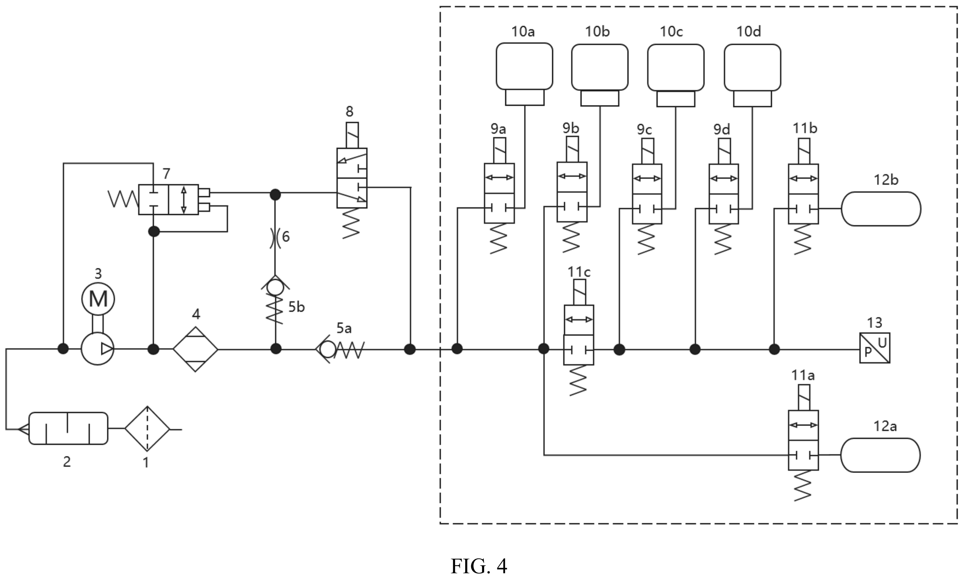

Refer to FIG. 4. FIG. 4 is a diagram of a structure of an air suspension system according to another embodiment of this application. A difference between an air suspension system shown in FIG. 4 and the air suspension system shown in FIG. 4 lies in that an air storage component 12 includes a first air storage tank 12a and a second air storage tank 12b that are separately disposed, a third solenoid valve 11a is connected to the first air storage tank 12a, and a fourth solenoid valve 11b is connected to the second air storage tank 12b.

When one of the first air storage tank 12a and the second air storage tank 12b is faulty or fails, the air suspension system 100 can still work.

For example, when the first air storage tank 12a fails and a vehicle body height of a front axle and a vehicle body height of a rear axle of a vehicle need to be synchronously raised, a first solenoid valve 9a, a first solenoid valve 9b, a second solenoid valve 9c, a second solenoid valve 9d, a fifth solenoid valve 11c, and the fourth solenoid valve 11b are powered on and turned on, the third solenoid valve 11a is powered off and turned off, high-pressure air in the second air storage tank 12b is inflated into a first air spring 10a through the fourth solenoid valve 11b, the fifth solenoid valve 11c, and the first solenoid valve 9a, the high-pressure air in the second air storage tank 12b is inflated into a first air spring 10b through the fourth solenoid valve 11b, the fifth solenoid valve 11c, and the first solenoid valve 9b, the high-pressure air in the second air storage tank 12b is inflated into a second air spring 10c through the fourth solenoid valve 11b and the second solenoid valve 9c, and the high-pressure air in the second air storage tank 12b is inflated into a second air spring 10d through the fourth solenoid valve 11b and the second solenoid valve 9d. In other words, the second air storage tank 12b, the fourth solenoid valve 11b, and the fifth solenoid valve 11c can form an inflation channel for inflating the first air spring 10a and the first air spring 10a.

For example, when the first air storage tank 12a fails, the first air spring 10a and the first air spring 10b may also be separately inflated. An example in which the first air spring 10a is separately inflated is used. The first solenoid valve 9a, the fourth solenoid valve 11b, and the fifth solenoid valve 11c are powered on and turned on, the first solenoid valve 9b, the second solenoid valve 9c, the second solenoid valve 9d, and the third solenoid valve 11a are powered off and turned off, and the high-pressure air in the second air storage tank 12b is inflated into the first air spring 10a through the fourth solenoid valve 11b, the fifth solenoid valve 11c, and the first solenoid valve 9a.

For example, when the second air storage tank 12b fails and the vehicle body height of the front axle and the vehicle body height of the rear axle of the vehicle need to be synchronously raised, the first solenoid valve 9a, the first solenoid valve 9b, the second solenoid valve 9c, the second solenoid valve 9d, the fifth solenoid valve 11c, and the third solenoid valve 11a are powered on and turned on, the fourth solenoid valve 11b is powered off and turned off, high-pressure air in the first air storage tank 12a is inflated into the first air spring 10a through the third solenoid valve 11a and the first solenoid valve 9a, the high-pressure air in the first air storage tank 12a is inflated into the first air spring 10b through the third solenoid valve 11a and the first solenoid valve 9b, the high-pressure air in the first air storage tank 12a is inflated into the second air spring 10c through the third solenoid valve 11a, the fifth solenoid valve 11c, and the second solenoid valve 9c, and the high-pressure air in the first air storage tank 12a is inflated into the second air spring 10d through the third solenoid valve 11a, the fifth solenoid valve 11c, and the second solenoid valve 9d. In other words, the first air storage tank 12a, the third solenoid valve 11a, and the fifth solenoid valve 11c can form an inflation channel for inflating the second air spring 10c and the second air spring 10d.

The second solenoid valve 9c, the second solenoid valve 9d, and the fourth solenoid valve 11b are connected to a first pressure sensor 13. The first pressure sensor 13 is configured to detect pressure in the second air storage tank 12b, the second air spring 10c, and the second air spring 10d. When the pressure in the second air storage tank 12b detected by the first pressure sensor 13 is lower than a preset value, the first solenoid valve 9a, the first solenoid valve 9b, the second solenoid valve 9c, the second solenoid valve 9d, the fourth solenoid valve 11b, and the fifth solenoid valve 11c are all powered off and turned off, the third solenoid valve 11a is powered on and turned on, and high-pressure air output from an air supply unit 101 is inflated into the second air storage tank 12b for storage. In other words, the second air storage tank 12b is replenished with air.

An air suspension 105 may further include a second pressure sensor. The second pressure sensor is connected to the third solenoid valve 11a, and the second pressure sensor is configured to detect pressure in the first air storage tank 12a. When the pressure in the first air storage tank 12a detected by the second pressure sensor is lower than the preset value, the first solenoid valve 9a, the first solenoid valve 9b, the second solenoid valve 9c, the second solenoid valve 9d, the fourth solenoid valve 11b, and the fifth solenoid valve 11c are all powered off and turned off, the third solenoid valve 11a is powered on and turned on, and the high-pressure air output from the air supply unit 101 is inflated into the first air storage tank 12a for storage. In other words, the first air storage tank 12a is replenished with air.

It should be understood that expressions such as "include" and "may include" that can be used in this application indicate existence of a disclosed function, operation, or constituent element, and are not limited to one or more additional functions, operations, or constituent elements. In this application, the terms such as "include" and/or "have" can be construed as indicating a particular feature, quantity, operation, constituent element, component, or a combination thereof, but shall not be construed as excluding existence or possible addition of one or more other features, quantities, operations, constituent elements, components, or combinations thereof.

In addition, in this application, the expression "and/or" includes any and all combinations of terms listed in association. For example, the expression "A and/or B" may include A, may include B, or may include both A and B.

In this application, expressions including ordinal numbers such as "first" and "second" may modify elements. However, such elements are not limited by the expressions. For example, the expressions do not limit an order and/or importance of the elements. The expressions are used only to distinguish one element from another. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component is referred to as "being connected to" or "accessing" another component, it should be understood that the component may be directly connected to or access the another component, or there may be another component between the component and the another component. In addition, when a component is referred to as "being directly connected to" or "directly accessing" another component, it should be understood that there is no component between the component and the another component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An air suspension system, applied to a vehicle, wherein the air suspension system comprises a first air spring, a second air spring, and an air storage component, the first air spring is configured to adjust a vehicle body height of a front axle of the vehicle, and the second air spring is configured to adjust a vehicle body height of a rear axle of the vehicle;
the air suspension system further comprises:
a first solenoid valve, connected to the first air spring;
a second solenoid valve, connected to the second air spring;
a third solenoid valve, connected between the first solenoid valve and the air storage component; and
a fourth solenoid valve, connected between the second solenoid valve and the air storage component; and
the first solenoid valve, the second solenoid valve, the third solenoid valve, and the fourth solenoid valve are all capable of being turned on when powered on, or capable of being turned off when powered off, in a case in which the first solenoid valve, the second solenoid valve, the third solenoid valve, and the fourth solenoid valve are all powered on and turned on, the first solenoid valve, the third solenoid valve, and the air storage component form a first air path, the second solenoid valve, the fourth solenoid valve, and the air storage component form a second air path, the air storage component inflates the first air spring through the first air path, and the air storage component inflates the second air spring through the second air path.

2. The air suspension system according to claim 1, wherein the air suspension system further comprises a deflation unit and a fifth solenoid valve, the deflation unit is connected to the first solenoid valve, the fifth solenoid valve is connected between the first solenoid valve and the second solenoid valve, and the fifth solenoid valve is turned on when powered on, or turned off when powered off.

3. The air suspension system according to claim 2, wherein in a case in which the third solenoid valve fails, when the fifth solenoid valve is powered on and turned on, the air storage component, the fourth solenoid valve, the fifth solenoid valve, and the first solenoid valve are capable of forming a path to inflate the first air spring, and the second solenoid switch, the fifth solenoid valve, and the deflation unit are capable of forming a path to deflate the second air spring.

4. The air suspension system according to claim 2, wherein in a case in which the fourth solenoid valve fails, the fifth solenoid valve is powered on and turned on, the air storage component, the third solenoid valve, the fifth solenoid valve, and the second solenoid switch are capable of forming a path to inflate the second air spring, and the second solenoid switch, the fifth solenoid valve, and the deflation unit are capable of forming a path to deflate the second air spring.

5. The air suspension system according to any one of claims 2 to 4, wherein the air storage component comprises a first air storage tank and a second air storage tank, the third solenoid valve is connected between the first air storage tank and the first solenoid valve, and the fourth solenoid valve is connected between the second air storage tank and the second solenoid valve.

6. The air suspension system according to claim 5, wherein in a case in which the first air storage tank fails, when the fifth solenoid valve, the fourth solenoid valve, and the first solenoid valve are all powered on and turned on, and the third solenoid valve is powered off and turned off, the fourth solenoid valve, the fifth solenoid valve, and the first solenoid valve communicate with the second air storage tank, to inflate the first inflation spring.

7. The air suspension system according to claim 5, wherein in a case in which the second air storage tank fails, the fourth solenoid valve is powered off and turned off, the third solenoid valve and the fifth solenoid valve are powered on and turned on, and the third solenoid valve, the fifth solenoid valve, and the second solenoid valve communicate with the first air storage tank, to inflate the second inflation spring.

8. The air suspension system according to any one of claims 1 to 4, wherein the air storage component comprises a first output port and a second output port, the first output port is connected to the third solenoid valve, and the second output port is connected to the fourth solenoid valve.

9. The air suspension system according to any one of claims 1 to 8, wherein there are at least two first air springs, a quantity of first solenoid valves is in a one-to-one correspondence with a quantity of first air springs, there are at least two second air springs, and a quantity of second solenoid valves is in a one-to-one correspondence with a quantity of second air springs.

10. The air suspension system according to any one of claims 1 to 9, wherein the air suspension system further comprises a first pressure sensor, and the first pressure sensor is connected to the air storage component and configured to detect air pressure in the air storage component.

11. A vehicle comprising the air suspension system according to any one of claims 1 to 10.
